(19) Europäisches Patentamt
European Patent Office
Office européen des brevets

(11) EP 2 166 032 B1

(12) **EUROPÄISCHE PATENTSCHRIFT**

(45) Veröffentlichungstag und Bekanntmachung des Hinweises auf die Patenterteilung:
**12.11.2014 Patentblatt 2014/46**

(51) Int Cl.:
***C08J 5/18*** *(2006.01)* ***B29C 55/14*** *(2006.01)*

(21) Anmeldenummer: **09011713.6**

(22) Anmeldetag: **14.09.2009**

(54) **Trübe Polyesterfolie mit verbesserter Lichtdurchlässigkeit**

Cloudy polyester film with improved translucence

Feuille de polyester trouble dotée d'une perméabilité à la lumière améliorée

(84) Benannte Vertragsstaaten:
**DE FR GB IT LU TR**

(30) Priorität: **18.09.2008 DE 102008047683**

(43) Veröffentlichungstag der Anmeldung:
**24.03.2010 Patentblatt 2010/12**

(73) Patentinhaber: **Mitsubishi Polyester Film GmbH**
**65203 Wiesbaden (DE)**

(72) Erfinder:
- **Jesberger, Martin**
**55122 Mainz (DE)**
- **Richter, Silke**
**65201 Wiesbaden (DE)**
- **Vogel, Thomas**
**90522 Oberasbach (DE)**
- **Mahl, Hans**
**65321 Laufenselden (DE)**
- **Bammert, Gisbert**
**65375 Oestrich-Winkel (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A1- 1 125 968** **EP-A1- 1 125 970**
**US-A1- 2008 107 880**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft eine trübe Folie aus einem thermoplastischen Polyester mit verbesserter Lichtdurchlässigkeit, deren Dicke im Bereich von 10 bis 100 μm liegt. Die Folie enthält mindestens ein Pigment mit einer Partikelgröße im kryptokristallinen Bereich sowie optional einen UV-Stabilisator als Lichtschutzmittel und sie kann zusätzlich dazu noch ein lösliches Flammschutzmittel und einen optischen Aufheller enthalten. Die Folie zeichnet sich durch eine gute Verstreckbarkeit und gute mechanische und optische Eigenschaften aus. Die Erfindung betrifft ferner ein Verfahren zur Herstellung dieser Folie und ihre Verwendung.

Weiß-opake Folien mit Dicken im Bereich zwischen 10 und 100 μm sind hinreichend bekannt. Die US-PS 4,780,402 beschreibt ein lichtempfindliches Bildmaterial mit einer opaken Trägerfolie aus Polyester, die einen hohen Anteil an Bariumsulfat im Bereich von 5 bis 50 Gew.-% aufweist. Die Teilchengröße des nach der Lehre der US-PS eingesetzten Bariumsulfats liegt im Bereich von 0,5 bis 10 μm.

Die EP 1 125 967 betrifft eine weiß-opake Folie mit niedriger Transparenz aus einem kristallisierbaren Thermoplasten, deren Dicke im Bereich von 10 bis 500 μm liegt. Die Folie enthält 0,2 bis 40 Gew.-% Bariumsulfat mit einer mittleren Teilchengröße im Bereich von 0,1 bis 5 μm als Weißpigment sowie einen optischen Aufheller und zeichnet sich durch eine gute Verstreckbarkeit, durch eine niedrige Transparenz, sowie durch sehr gute optische und mechanische Eigenschaften aus. Das Bariumsulfat und/oder der optische Aufheller werden entweder direkt beim Rohstoffhersteller in den Thermoplasten eingearbeitet oder als Masterbatch bei der Folienherstellung zudosiert. Die Folie ist auf Grund ihrer Eigenschaftskombination für vergleichbare Anwendungen, wie zuvor in EP 1 125 966 beschrieben, geeignet. Die Transparenz der Folie ist jedoch für die gewünschte Lichtdurchlässigkeit (Transluzenz) für spezielle Anwendungen im Außenbereich wie Außenverglasung nicht geeignet.

In EP 1 842 663 wird eine weiß-opake koextrudierte Folie beschrieben, die neben Weißpigmenten mindestens ein Antiblockmittel in den Außenschichten für die bessere Wickelbarkeit enthält. Die Transparenz dieser Folie ist allerdings sehr niedrig, ähnlich wie bei EP 1 125 967. Wegen ihrer geringen Lichtdurchlässigkeit kann auch diese Folie nach dem Stand der Technik nicht für die Verglasung, insbesondere nicht im Außenbereich, verwendet werden.

Aufgabe der vorliegenden Erfindung war es, eine trübe Polyesterfolie mit einer Dicke von 10 bis 100 μm bereitzustellen, die neben ihren besonderen optischen Eigenschaften, hohe Lichtdurchlässigkeit in Verbindung mit hoher Lichtstreuung, eine entsprechend dem Stand der Technik gute Verstreckbarkeit und gute mechanischen Eigenschaften zeigt.

Der Begriff Lichtdurchlässigkeit soll anmeldungsgemäß als eine gute Durchlässigkeit für sichtbares Licht verstanden werden, bei der aber gleichzeitig eine Volumenstreuung des durchgelassenen Lichtes stattfindet.

Eine hohe UV-Stabilität bedeutet, dass die Folien durch Sonnenlicht oder andere UV-Strahlung nicht oder nur extrem wenig geschädigt werden, so dass sich die Folien für Außenanwendungen und/oder kritische Innenanwendungen eignen. Insbesondere sollen die Folien bei mehrjähriger Außenanwendung nicht vergilben, sie sollen keine Versprödung oder Rissbildung der Oberfläche zeigen und sie sollen auch keine Verschlechterung der mechanischen Eigenschaften aufweisen. Hohe UV-Stabilität bedeutet demnach, dass die Folie das UV-Licht absorbiert und Licht erst im sichtbaren Bereich durchlässt.

Zu den guten optischen Eigenschaften zählen beispielsweise eine homogene, streifenfreie Einfärbung über die gesamte Folienlänge und Folienbreite, eine hohe Lichtdurchlässigkeit (größer als 56 %) und hohe Volumenstreuung, ausgedrückt als Trübung im Bereich von 40 bis 95 %, ein geringer Oberflächenglanz (kleiner als 30, gemessen bei 20°), sowie eine niedrige Gelbzahl, die in Abhängigkeit von der Foliendicke kleiner als 40 bei 100 μm-Folien und kleiner als 30 bei 50 μm Folien sein soll.

Zu den guten mechanischen Eigenschaften zählen unter anderem ein hoher E-Modul ($E_{MD}$ > 3200 N/mm$^2$; $E_{TD}$ > 4100 N/mm$^2$) sowie gute Reißfestigkeitswerte (in MD > 120 N/mm$^2$; in TD > 170 N/mm$^2$) und gute Reißdehnungswerte in Längs- und in Querrichtung (in MD > 120 %; in TD > 50 %).

Zu der guten Verstreckbarkeit zählt, dass sich die Folie während ihrer Herstellung sowohl in Längs- als auch in Querrichtung hervorragend und ohne Abrisse streckorientieren lässt.

Darüber hinaus sollte die erfindungsgemäße Folie rezyklierbarsein, d.h. dass während der Folienherstellung im laufenden Betrieb anfallendes Verschnittmaterial wieder als Regenerat in den Produktionsbetrieb zurückgeschleust werden kann, insbesondere ohne Verlust der optischen und der mechanischen Eigenschaften der Folie, damit sie beispielsweise auch für Innenanwendungen und im Messebau eingesetzt werden kann.

Gelöst wird diese Aufgabe durch eine trüde Polyesterfolie mit einer Dicke im Bereich von 10 bis 100 μm, die als Hauptbestandteil einen thermoplastischen Polyester enthält. Sie ist **dadurch gekennzeichnet, dass** die Folie Bariumsulfat mit einer mittleren Korngröße im Bereich von 0,1 bis 0,5 μm, ausgedrückt als $d_{50}$-Wert (gemessen mittels Laser), enthält und zusätzlich dazu optional einen UV-Stabilisator als Lichtschutzmittel und dass sie eine Lichtdurchlässigkeit, gemessen nach ASTM-D 1003, von größer als 56 % besitzt.

Die Folie gemäß der Erfindung enthält als Hauptbestandteil einen thermoplastischen Polyester. Geeignete thermoplastische Polyester sind beispielsweise Polyethylenterephthalat, Polybutylenterephthalat oder Polyethylennaphthalat, wobei Polyethylenterephthalat bevorzugt ist.

Die Folie gemäß der Erfindung kann sowohl einschichtig als auch mehrschichtig sein, und sie kann mit diversen Copolyestern oder mit Haftvermittlern beschichtet sein.

Die Folie gemäß der Erfindung kann optional einen UV-Stabilisator als Lichtschutzmittel enthalten, der zweckmäßigerweise über die sogenannte Masterbatch-Technologie direkt bei der Folienherstellung zudosiert wird, wobei die Menge an UV-Stabilisator vorzugsweise im Bereich zwischen 0 und 5 Gew.-%, bezogen auf das Gewicht des kristallisierbaren Thermoplasten, liegt.

Die Folie enthält Bariumsulfat als Pigment, wobei die Menge an Pigment im Bereich zwischen 5,0 und 25 Gew.-%, bevorzugt im Bereich zwischen 10,0 und 25,0 Gew.-% und besonders bevorzugt im Bereich von 15 und 20 Gew.-%, bezogen auf das Gesamtgewicht von kristallisierbarem Thermoplast plus Pigment, liegt. Vorzugsweise wird das Bariumsulfat über die sogenannte Masterbatch-Technologie bei der Folienherstellung dem Thermoplasten zudosiert.

Die Folie kann zusätzlich noch einen optischen Aufheller enthalten, wobei der optische Aufheller in Mengen im Bereich von 10 bis 50.000 ppm, insbesondere von 20 bis 30.000 ppm, besonders bevorzugt von 50 bis 25.000 ppm, bezogen auf das Gewicht des kristallisierbaren Thermoplasten, eingesetzt wird. Vorzugsweise wird auch der optische Aufheller über die sogenannte Masterbatch-Technologie bei der Folienherstellung dem Thermoplasten zudosiert. Erfindungsgemäß geeignete optische Aufheller sind solche Verbindungen, die in der Lage sind, nicht sichtbare UV-Strahlen im Bereich von 360 bis 380 nm zu absorbieren und als längerwelliges, sichtbares blauviolettes Licht wieder abzugeben.

Geeignete optische Aufheller in diesem Sinne sind Bis-benzoxazole, Phenylcumarine und Bis-sterylbiphenyle, insbesondere Phenylcumarin, besonders bevorzugt sind Triazin-phenylcumarine, die unter der Produktbezeichnung ®Tinopal bei Ciba-Geigy, Basel, Schweiz, erhältlich sind, oder ®Hostalux KS (Clariant, Deutschland) sowie ®Eastobrite OB-1 (Eastman).

Sofern zweckmäßig, können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere Sudanblau 2 (BASF, Ludwigshafen, Bundesrepublik Deutschland) erwiesen.

Die blauen Farbstoffe werden in Mengen von 10 bis 10.000 ppm, insbesondere 20 bis 5.000 ppm, besonders bevorzugt 50 bis 1.000 ppm, bezogen auf das Gewicht des kristallisierbaren Thermoplasten, eingesetzt.

Als Hydrolysestabilisator werden im allgemeinen phenolische Stabilisatoren, Alkali-/Erdalkalistearate und/oder Alkali-/Erdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.-%, und mit einer Molmasse von mehr als 500 g/mol bevorzugt. Die Verbindungen Pentaerythrityl-Tetrakis-3-(3,5-di-Tertiärbutyl-4-Hydroxyphenyl)-Propionat oder 1,3,5-Trimethyl-2,4,6-tris(3,5-di-Tertärbutyl-4-Hydroxybenzyl)benzol sind besonders vorteilhaft.

Es war völlig überraschend, dass der Einsatz von Bariumsulfat mit einer Korngröße im Bereich von 0,1 bis 0,5 $\mu$m, ausgedrückt als $d_{50}$-Wert, zu dem angestrebten guten Profil an optischen Eigenschaften in Kombination mit guter Mechanik führte.

Des Weiteren ist sehr überraschend, dass auch das Folienverschnittmaterial als Regenerat wieder für die Folienproduktion einsetzbar ist, ohne den Gelbwert der Folie negativ zu beeinflussen.

In einer bevorzugten Ausführungsform werden gefällte Bariumsulfat-Typen eingesetzt. Gefälltes Bariumsulfat erhält man aus Bariumsalzen und Sulfaten oder Schwefelsäure als feinteiliges farbloses Pulver, dessen Korngröße durch die Fällungsbedingungen zu steuern ist. Gefällte Bariumsulfate können nach den üblichen Verfahren, die in Kunststoff-Journal 8, Nr. 10, 30-36 und Nr. 11, 36-31 (1974) beschrieben sind, hergestellt werden.

Die mittlere Korngröße des Bariumsulfats ist relativ klein und liegt vorzugsweise im Bereich von 0,1 bis 0,5 $\mu$m, bevorzugt im Bereich von 0,15 bis 0,45 $\mu$m und besonders bevorzugt im Bereich von 0,20 bis 0,40 $\mu$m. Die Messung dieser Korngrößen im kryptokristallinen Bereich als $d_{50}$-Wert wird mittels Laser durchgeführt, die genaue Messmethode ist im Rahmen der Erläuterungen der Ausführungsbeispiele beschrieben. Die Dichte des verwendeten Bariumsulfates liegt zwischen 3 und 6 g/cm$^3$.

In einer besonders bevorzugten Ausführungsform enthält die erfindungsgemäße Folie als Hauptbestandteil ein kristallisierbares Polyethylenterephthalat sowie 5 bis 25 Gew.-% gefälltes Bariumsulfat, zweckmäßigerweise mit einer Korngröße von 0,25 bis 0,35 $\mu$m, wobei ®Blanc Fixe $d_{50}$ = 0,30 $\mu$m ($\pm$ 0,05$\mu$m) von der Firma Sachtleben Chemie, DE, besonders bevorzugt wird.

Ferner enthält die erfindungsgemäße Folie als UV-Stabilisator 0,01 bis 5,0 Gew.-% 2-(4,6-Diphenyl-1,3,5-triazin-2-yl)-5-(hexyl)oxy-phenol der Formel:

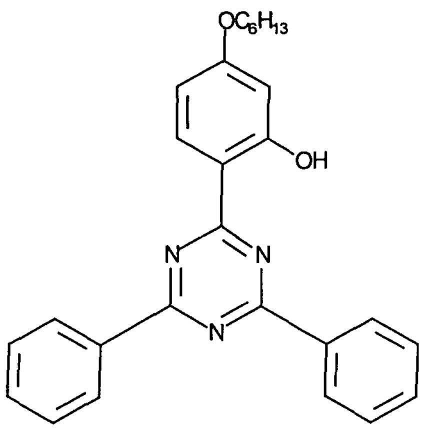

oder alternativ dazu 0,1 bis 5,0 Gew.-% 2,2'-Methylen-bis(6-(2H-benzotriazol-2-yl)-4-(1,1,2,2-tetramethylpropyl)-phenol der Formel:

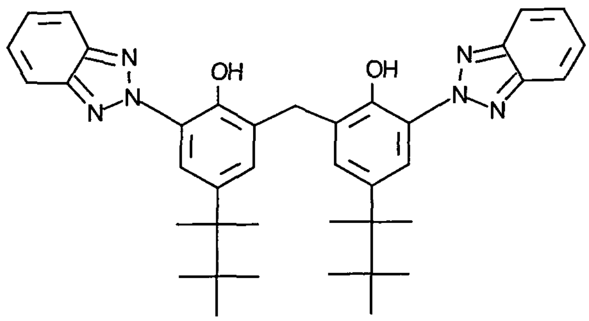

jeweils bezogen auf das Gewicht des Thermoplasten.

In einer weiteren Ausführungsform können auch Mischungen der genannten UV-Stabilisatoren oder Mischungen von mindestens einem der bevorzugten UV-Stabilisatoren mit anderen UV-Stabilisatoren eingesetzt werden, wobei die Gesamtmenge an Lichtschutzmittel vorzugsweise zwischen 0,01 Gew.-% und 5,0 Gew.-%, bezogen auf das Gesamtgewicht des Thermoplasten plus Zusatzstoffe, liegt.

In einer weiteren Ausführungsform der Erfindung kann ein weiterer UV-Stabilisator zum Einsatz kommen, der folgende Strukturformel (I) aufweist:

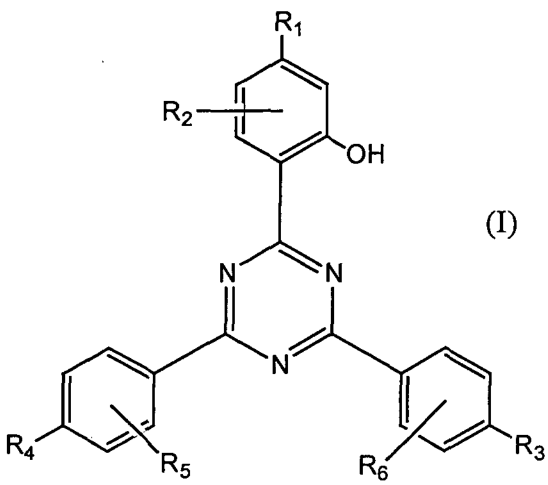

(I)

wobei

$R_1$ -H, $-C_1-C_{12}$-Alkyl, -Aryl, $-S-(C_1-C_{12})$-Alkyl oder-O-$R_9$ oder-

$O-(C_1-C_5)$-Alkylen-C(O)O-$R_9$ bedeutet, wobei $R_9$ -Aryl oder -$C_1$-$C_{12}$-Alkyl bedeutet,

$R_3$ und $R_4$ 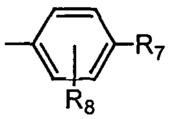 bedeuten und

$R_2$, $R_5$, $R_6$, $R_7$ und $R_8$ unabhängig voneinander-H, -$(C_1-C_{12})$-Alkyl, -O-$(C_1-C_{12})$-Alkyl, -Aryl oder -O-Aryl bedeuten,

wobei die genannten Alkylreste mit mehr als zwei C-Atomen und die Alkylenreste mit mehr als einem C-Atom linear oder verzweigt sein können.

Bevorzugt sind Verbindungen der Formel (I), in denen

| | |
|---|---|
| $R_1$ | -O-$R_9$ oder -O-CH$(CH_3)$-C(O)O-$R_9$ ist, mit |
| $R_9$ | gleich Hexyl, Heptyl oder Octyl und |
| $R_2$, $R_5$, $R_6$, $R_7$ und $R_8$ | -H |

bedeuten.

Besonders bevorzugt ist das als Tinuvin 479 von Ciba SC (CH) angebotene 2-(2-hydroxy-4-[1-octyloxycarbonylethoxy]phenyl)-4,6-bis(4-phenylphenyl)-1,3,5-triazin.

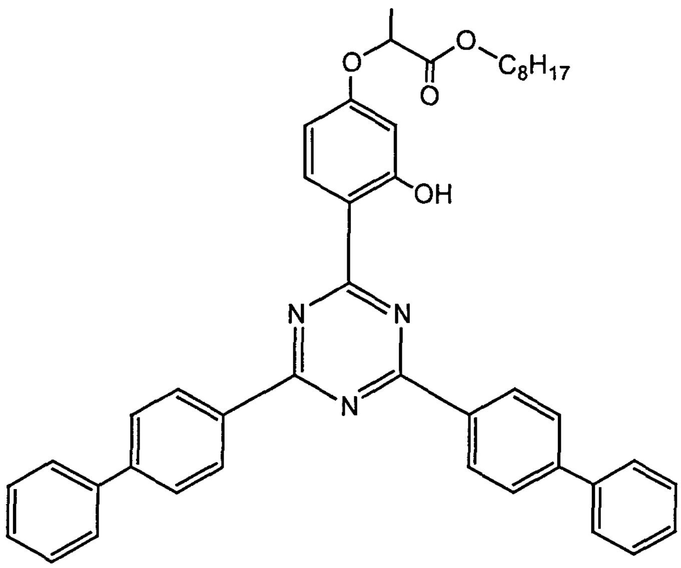

Der Oberflächenglanz der erfindungsgemäßen trüben Folie, gemessen nach DIN 67530 (Messwinkel 20°) ist kleiner als 30, vorzugsweise kleiner als 25 und besonders bevorzugt kleiner 20.

Die Lichtdurchlässigkeit der erfindungsgemäßen trüben Folie, gemessen nach ASTM-D 1003 ist größer als 56 %, bevorzugt größer als 60 %, besonders bevorzugt größer als 64 %. Die Einfärbung ist homogen und streifenfrei über die gesamte Lauflänge und Folienbreite.

Die Standardviskosität SV (DCE) des Polyethylenterephthalats, gemessen in Dichloressigsäure nach DIN 53728 bei 25 °C, liegt im Bereich zwischen 600 und 1000, vorzugsweise zwischen 650 und 900.

Die intrinsische Viskosität (IV) berechnet sich wie folgt aus der Standardviskosität

$$IV\ [\eta\ ] = 6{,}907 \cdot 10^{-4}\ SV\ (DCE) + 0{,}063096\ [dl/g].$$

Die trübe Polyethylenterephtalat-Folie, die mindestens Bariumsulfat in einer Menge von 5 bis 25 Gew.-% mit einer mittleren Korngröße im Bereich von 0,1 bis 0,5 μm enthält, und einen optischen Aufheller, einen UV-Stabilisator und gegebenenfalls blauen Farbstoffe enthalten kann, kann sowohl einschichtig als auch mehrschichtig sein. Durch

Zugabe von geringen Mengen anderer Weißpigmente, wie beispielsweise Titandioxid können ebenfalls noch gute optische und mechanische Eigenschaften erzielt werden. In der bevorzugten Form enthält die Polyesterfolie neben Bariumsulfat allerdings keine weiteren Weißpigmente.

In der mehrschichtigen Ausführungsform ist die Folie aus mindestens einer Kernschicht und mindestens einer Deckschicht aufgebaut, wobei insbesondere ein dreischichtiger Aufbau der Art A-B-A oder A-B-C bevorzugt ist.

Für die mehrschichtige Ausführungsform ist es wesentlich, dass das Polyethylenterephthalat der Kernschicht eine ähnliche Standardviskosität besitzt wie das Polyethylenterephthalat der Deckschicht(en), die an die Kernschicht angrenzt(angrenzen).

In einer besonderen Ausführungsform können die Deckschichten auch aus einem Polyethylennaphthalat-Homopolymeren oder aus einem Polyethylenterephthalat-Polyethylennaphthalat-Copolymeren oder einem Compound bestehen. In dieser besonderen Ausführungsform haben die Thermoplasten der Deckschichten ebenfalls eine ähnliche Standardviskosität wie das Polyethylenterephthalat der Kernschicht.

Anders als in der einschichtigen Ausführungsform bezieht sich bei der mehrschichtigen Ausführungsform die Mengenangabe der Additive auf das Gewicht der Thermoplasten in der jeweiligen mit dem/den Additiven ausgerüsteten Schicht.

Bei der Herstellung der Folie wurde festgestellt, dass sich die Folie hervorragend in Längs- und in Querrichtung ohne Abrisse orientieren lässt.

Des Weiteren ist die erfindungsgemäße Folie ohne Umweltbelastung und ohne Verlust der mechanischen Eigenschaften problemlos rezyklierbar.

Die Herstellung der erfindungsgemäßen Folie kann beispielsweise nach einem Extrusionsverfahren in einer Extrusionsstraße erfolgen.

Erfindungsgemäß können das Bariumsulfat und der UV-Stabilisator, gegebenenfalls auch der optische Aufheller und der blaue Farbstoff direkt beim Thermoplast-Rohstoffhersteller eingearbeitet werden oder die Zusatzmittel können bei der Folienherstellung in den Extruder über die Masterbatch-Technologie dem Thermoplasten zudosiert werden. Bevorzugt ist die Zudosierung des Bariumsulfats und des UV-Stabilisators, des optischen Aufhellers und des blauen Farbstoffes über die Masterbatch-Technologie. Die Additive werden dabei in einem festen Trägermaterial voll dispergiert. Als Trägermaterialien kommen der Thermoplast selbst, wie z. B. das Polyethylenterephthalat oder auch andere Polymere, die mit dem Thermoplasten ausreichend verträglich sind, oder Wachse in Frage.

Die Polyesterfolien können nach bekannten Verfahren aus einem Polyesterrohstoff mit ggf. weiteren Rohstoffen sowie dem optischen Aufheller, dem UV-Stabilisator, dem Flammschutzmittel, dem Bariumsulfat, gegebenenfalls dem blauen Farbstoff und/oder weiteren üblichen Additiven in üblicher Menge von 0,1 bis maximal 10 Gew.-% sowohl als Monofolien als auch als mehrschichtige, ggf. koextrudierte Folien mit gleichen oder unterschiedlich ausgebildeten Oberflächen hergestellt werden, wobei eine Oberfläche beispielsweise pigmentiert und UV-stabil ausgerüstet ist und die andere Oberfläche kein Pigment und/oder UV-Stabilisator enthält. Ebenso können eine oder beide Oberflächen der Folie nach bekannten Verfahren mit einer üblichen funktionalen Beschichtung versehen werden.

Bei dem bevorzugten Extrusionsverfahren zur Herstellung der Polyesterfolie wird das vorher aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen erfindungsgemäß bei $T_g$ + 10 K bis $T_g$ + 60 K (mit $T_g$ = Glastemperatur), das Streckverhältnis der Längsstreckung liegt erfindungsgemäß im Bereich von 2 bis 6, insbesondere von 2,5 bis 4,5, das der Querstreckung im Bereich von 2 bis 5, insbesondere von 3 bis 4,5, und das der ggf. durchgeführten zweiten Längsstreckung von 1,1 bis 3. Die erste Längsstreckung kann ggf. gleichzeitig mit der Querstreckung (Simultanstreckung) durchgeführt werden. Anschließend folgt die Thermofixierung der Folie bei Ofentemperaturen im Bereich von 200 bis 260 °C, insbesondere von 220 bis 250 °C, über eine Zeitdauer von 0,5 bis 10 s. Im Anschluss daran wird die Folie abgekühlt und aufgewickelt.

Durch die überraschende Kombination ausgezeichneter Eigenschaften, nämlich hoher Lichtdurchlässigkeit in Verbindung mit guter Streuwirkung (Volumenstreuung), eignet sich die erfindungsgemäße Folie hervorragend für die Fensterinnen- und -außenverglasung, für Innenraumverkleidungen, insbesondere in hellen Räumen, für den Messebau und Messeartikel, in Fahrzeugen und Gebäuden, im Beleuchtungssektor und im Laden- und Regalbau.

In der nachfolgenden Tabelle sind die besonderen Merkmale der erfindungsgemäßen Folie und ihre Vorzugsbereiche noch einmal komplett zusammengestellt.

Tabelle 1

| | bevorzugt | besonders bevorzugt | ganz besonders bevorzugt | Einheit | Messmethode |
|---|---|---|---|---|---|
| Folienstärke | 10 bis 100 | 12 bis 75 | 23 bis 65 | µm | - |

(fortgesetzt)

| | bevorzugt | besonders bevorzugt | ganz besonders bevorzugt | Einheit | Messmethode |
|---|---|---|---|---|---|
| Konzentration an Bariumsulfat (Weißpigment) | 5,0 bis 25,0 | 10,0 bis 25,0 | 15,0 bis 25,0 | Gew.-% | intern |
| mittlere Korngröße ($d_{50}$) des Bariumsulfats | 0,1 bis 0,5 | 0,15 bis 0,45 | 0,20 bis 0,40 | µm | Lasermethode (siehe Beschreibung) |
| Lichtdurchlässigkeit der Folie | > 56 | >60 | >64 | % | ASTM-D 1003-00 |
| Trübung | 40 - 95 | 45-90 | 50 - 85 | % | ASTM-D 1003-00 |
| Glanz jeweils 1. und 2. Folienseite (Einstrahlwinkel = 20°) | < 30 | < 25 | < 20 | | DIN 67530 |
| Gelbzahl bei Folie <50 µm | <30 | <25 | <20 | | DIN 6167 |
| Gelbzahl bei Folie <100 µm | <40 | <35 | <30 | | DIN 6167 |

Die Messung der einzelnen Eigenschaften der erfindungsgemäßen Folie erfolgt anmeldungsgemäß nach den folgenden Normen bzw. Verfahren.

**Messmethoden**

**Oberflächenglanz**

Der Oberflächenglanz wird nach DIN 67530 gemessen. Angelehnt an die Normen ASTM-D 523 78 und ISO 2813 wird der Einstrahlwinkel bei 20° eingestellt.

**Lichtdurchlässigkeit und Trübung**

Die Lichtdurchlässigkeit und Trübung wird an einer Folie mit einer Dicke von 50 µm mit dem Messgerät Hazegard Hazemeter XL-211 der Fa. BYK Gardner nach ASTM D 1003-00 gemessen.

Unter der Lichtdurchlässigkeit ist das Verhältnis der insgesamt durchgelassenen Menge an Licht zur einfallenden Lichtmenge zu verstehen.

**Oberflächendefekte, homogene Einfärbung**

Die Oberflächendefekte und die homogene Einfärbung werden visuell bestimmt.

**Mechanische Eigenschaften**

Der E-Modul, die Reißfestigkeit und die Reißdehnung werden in Längs- und Querrichtung nach ISO 527-1-2 gemessen.

SV (DCE), IV (DCE)

Die Standardviskosität SV (DCE) wird angelehnt an DIN 53726 in Dichloressigsäure bei einer Temperatur von 25 °C gemessen.

Die intrinsische Viskosität (IV) berechnet sich wie folgt aus der Standardviskosität

$$IV\ [\eta\ ] = 6{,}907 \cdot 10^{-4}\ SV\ (DCE) + 0{,}063096\ [dl/g]$$

**Gelbwert**

Der Gelbwert YID ist die Abweichung von der Farblosigkeit in Richtung "Gelb" und wird gemäß DIN 6167 gemessen.

**Messung des mittleren Durchmessers $d_{50}$**

Die Bestimmung des mittleren Durchmessers $d_{50}$ wird mittels Laser auf einem Malvern Master Sizer nach der Standardmethode durchgeführt (andere Messgeräte sind z. B. Horiba LA 500 oder Sympathec Helos, welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes.
Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse sofort den gewünschten $d_{50}$-Wert. Wie dies zu verstehen ist, wird in Figur 1 näher verdeutlicht.

**Messung der UV-Stabilität**

Alle Folien werden nach der Testspezifikation ISO 4892 beidseitig je 1000 Stunden pro Seite mit dem Atlas Ci 65 Weather-Ometer der Fa. Atlas bewittert und anschließend bezüglich der mechanischen Eigenschaften, der Verfärbung, der Oberflächendefekte, der Lichtdurchlässigkeit und des Glanzes geprüft.

**Messung der Flammfestigkeit**

An allen Folien werden Brandtests nach DIN 4102, Teil 2 und Teil 1, und der UL-Test 94 durchgeführt.

**Masterbatch 1 (MB1)**

Extrusionsmasterbatch mit 24 Gew.-% $BaSO_4$ ($BaSO_4$ = Blanc Fixe®, mittlere Korngröße $d_{50}$= 0,30 µm der Fa. Sachtleben, DE, und 300 ppm Hostalux KS der Fa. Clariant, DE) in Polyethylenterephthalat (PET). Das Bariumsulfat und das Hostalux KS wurden dabei zusammen mit dem Polyesterrohstoff T94 der Firma Invista, DE, in die Einzugszone eines Werner und Pfleiderer (DE)- Zweischneckenextruders dosiert, extrudiert und granuliert.

**Masterbatch 2 (MB2)**

Extrusionsmasterbatch mit 20 Gew.-% aus UV-Stabilisator Tinuvin 1577®, Ciba-Geigy, CH, und 40 ppm blauen Farbstoff Sudanblau 2, BASF, DE in Polyethylenterephthalat. Die Komponenten wurden dabei zusammen mit dem Polyesterrohstoff T94 der Firma Invista, DE, in der Einzugszone eines Werner und Pfleiderer-Zweischneckenextruders dosiert, extrudiert und granuliert.

**Masterbatch 3 (MB3)**

Extrusionsmasterbatch mit 10 Gew.-% $SiO_2$ (Silysia® 320, mittlere Korngröße $d_{50}$= 2,5 µm, der Firma Fuji Sylysia, JP) in Polyethylenterephthalat (PET). Das Siliziumdioxid wurde dabei zusammen mit dem Polyesterrohstoff T94 der Firma Invista, DE, in der Einzugszone eines Werner und Pfleiderer-Zweischneckenextruders dosiert, extrudiert und granuliert.

**Rohstoff (R1)**

100 Gew.-% Polyethylenterephthalat RT49 der Firma Invista, DE.
Die Folieneigenschaften zu den folgenden Beispielen sind im Anschluss an die Beschreibung der Beispiele im Einzelnen in Tabelle 2 aufgeführt.

**Beispiel 1**

Es wurde eine 50 µm dicke, biaxial orientierte, trübe Folie hergestellt, die als Hauptbestandteil Polyethylenterephthalat (RT49, Invista, Deutschland) als Klarrohstoff, 18 Gew.-% Bariumsulfat (Blanc Fixe $d_{50}$ = 0,3 µm, Sachtleben Chemie, DE) als Pigment enthält.
Das Additiv Bariumsulfat wurde als Masterbatch zugegeben. Das Polyethylenterephthalat, aus dem die Folie

hergestellt wurde, und das Polyethylenterephthalat, das zur Herstellung der Masterbatches verwendet wurde, hatte eine Standardviskosität SV (DCE) von 810, was einer intrinsischen Viskosität von 0,658 dl/g entspricht.

Vor der Extrusion wurden 75 Gew.-% von Masterbatch (1) und 25 Gew.-% Rohstoff R1 bei einer Temperatur von 150 °C getrocknet und anschließend im Extruder aufgeschmolzen. Das geschmolzene Extrudat wurde durch eine Schlitzdüse extrudiert und auf einer Kühlwalze zu einer amorphen Vorfolie abgeschreckt. Die Vorfolie wurde dann zunächst um einen Faktor von 3,5 bei 87 °C längsgestreckt und im Anschluss daran um 3,5 bei 105 °C quergestreckt. Anschließend erfolgte die Thermofixierung der Folie bei 240 °C über eine Zeitdauer von 2 s. Schließlich wurde die Folie abgekühlt und aufgewickelt.

**Beispiel 2**

Die Rezeptur aus Beispiel 1 wurde modifiziert. Vor der Extrusion wurden 75 Gew.-% MB1 und 25 Gew.-% MB2 bei einer Temperatur von 150 °C getrocknet und anschließend im Extruder aufgeschmolzen. Alle anderen Parameter wurden beibehalten.

**Beispiel 3**

Die Rezeptur aus Beispiel 1 wurde modifiziert. Das MB1 wurde zu 100 Gew.-% eingesetzt.

**Beispiel 4**

Die Folie aus Beispiel 1 wurde als ABA-Folie gefahren. Die Formulierung der Basis ist dabei identisch zur Formulierung von Beispiel 2. Die Prozessarameter wurden entsprechend wie im Beispiel1 eingestellt.

Die Folie wurde demnach mit folgender Formulierung gefahren:

Basis B: 42 μm; Formulierung wie Beispiel 1
Deckschichten A: Jeweils 4 μm; 75 Gew.-% MB1, 10 Gew.-% Rohstoff R1 und 15 Gew.-% MB3

**Beispiel 5 (Vergleichsbeispiel)**

Es wurde eine 50 m dicke, weiß-opake Folie nach EP 1 125 966 hergestellt, die als Hauptbestandteil Polyethylenterephthalat (RT49, Invista, Deutschland) als Klarrohstoff, 18 Gew.-% Bariumsulfat (Blanc fixe XR-HX, Sachtleben Chemie) als Pigment mit einer mittleren Korngröße von 0,6 μm (Datenblatt der Fa. Sachtleben). Dazu wurden die gleichen Prozessparameter wie in Beispiel 1 verwendet.

**Tabelle 2**

| Eigenschaften | B. 1 | B. 2 | B. 3 | B. 4 | B. 5(= Vergl.) |
|---|---|---|---|---|---|
| Dicke [μm] | 50 | 50 | 50 | 50 | 50 |
| SV | 732 | 683 | 656 | 676 | 722 |
| Oberflächenglanz 1. Seite | 9 | 6 | 5 | 11 | 20 |
| (Messwinkel 20°) 2. Seite | 10 | 6 | 5 | 12 | 21 |
| Lichtdurchlässigkeit [%] | 70 | 71 | 65 | 71 | 19 |
| Trübung [%] | 77 | 70 | 84 | 75 | 99 |
| Gelbzahl (YID) | 10 | 15 | 10 | 10 | 18 |
| E-Modul längs [N/mm$^2$] | 3800 | 3800 | 3800 | 3810 | 3600 |
| E-Modul quer [N/mm$^2$] | 4300 | 4350 | 4200 | 4600 | 5100 |
| Reißfestigkeit längs [N/mm$^2$] | 160 | 160 | 145 | 155 | 145 |
| Reißfestigkeit quer [N/mm$^2$] | 190 | 190 | 190 | 195 | 240 |
| Reißdehnung längs [%] | 150 | 152 | 155 | 160 | 185 |
| Reißdehnung quer [%] | 100 | 100 | 75 | 91 | 70 |

## Patentansprüche

1. Trübe Polyesterfolie mit einer Dicke im Bereich von 10 bis 100 μm, die als Hauptbestandteil einen thermoplastischen Polyester enthält, **dadurch gekennzeichnet, dass** die Folie Bariumsulfat mit einer mittleren Korngröße im Bereich von 0,1 bis 0,5 μm, ausgedrückt als $d_{50}$-Wert (gemessen mittels Laser), enthält und zusätzlich dazu optional einen UV-Stabilisator als Lichtschutzmittel und dass sie eine Lichtdurchlässigkeit, gemessen nach ASTM-D 1003, von größer als 56 % besitzt.

2. Polyesterfolie nach Anspruch 1, **dadurch gekennzeichnet, dass** sie Bariumsulfat in einer Menge im Bereich von 5 bis 25 Gew.-% enthält, bezogen auf das Gesamtgewicht der Folie.

3. Polyesterfolie nach Anspruch 1 oder 2, **dadurch gekennzeichnet, dass** sie eine Lichtdurchlässigkeit, gemessen nach ASTM-D 1003, von größer als 56 % besitzt, vorzugsweise von größer als 60 %, besonders bevorzugt von größer als 64 %.

4. Polyesterfolie nach einem oder nach mehreren der Ansprüche 1 bis 3, **dadurch gekennzeichnet, dass** sie als thermoplastischen Polyester Polyethylenterephthalat, Polybutylenterephthalat oder Polyethylennaphthalat enthält, wobei Polyethylenterephthalat bevorzugt ist.

5. Polyesterfolie nach einem oder nach mehreren der Ansprüche 1 bis 4, **dadurch gekennzeichnet, dass** sie eine Trübung, gemessen nach ASTM-D 1003, im Bereich von 40 bis 95 % besitzt, vorzugsweise von 45 bis 90 %, besonders bevorzugt von 50 bis 85%.

6. Polyesterfolie nach einem oder nach mehreren der Ansprüche 1 bis 5, **dadurch gekennzeichnet, dass** sie Bariumsulfat in einer Menge im Bereich zwischen 10,0 und 25,0 Gew.-%, bevorzugt im Bereich von 15 und 20 Gew.-%, bezogen auf das Gesamtgewicht von thermoplastischem Polyester plus Pigment, enthält.

7. Polyesterfolie nach einem oder nach mehreren der Ansprüche 1 bis 6, **dadurch gekennzeichnet, dass** das Bariumsulfat eine mittlere Korngröße im Bereich von 0,15 bis 0,45 μm besitzt, bevorzugt im Bereich von 0,20 bis 0,40 μm.

8. Polyesterfolie nach einem oder nach mehreren der Ansprüche 1 bis 7, **dadurch gekennzeichnet, dass** sie als UV-Stabilisator eine Menge von 0,01 bis 5,0 Gew.-% an 2-(4,6-Diphenyl-1,3,5-triazin-2-yl)-5-(hexyl)oxy-phenol oder eine Menge von 0,1 bis 5,0 Gew.-% an 2,2'-Methylen-bis(6-(2H-benzotriazol-2-yl)-4-(1,1,2,2-tetramethylpropyl)-phenol enthält, jeweils bezogen auf das Gewicht des thermoplastischen Polyesters.

9. Polyesterfolie nach einem oder nach mehreren der Ansprüche 1 bis 7, **dadurch gekennzeichnet, dass** sie als UV-Stabilisator eine Menge von 0,1 bis 7 Gew.-% an 2-(2-hydroxy-4-[1-octyloxycarbonylethoxy]phenyl)-4,6-bis(4-phenylphenyl)-1,3,5-triazin enthält, bezogen auf das Gewicht des thermoplastischen Polyesters.

10. Polyesterfolie nach einem oder nach mehreren der Ansprüche 1 bis 9, **dadurch gekennzeichnet, dass** sie einen mehrschichtigen Aufbau aus mindestens einer Kernschicht und mindestens einer Deckschicht besitzt.

11. Polyesterfolie nach Anspruch 10, **dadurch gekennzeichnet, dass** sei einen dreischichtigen Aufbau der Art A-B-A oder A-B-C besitzt mit B gleich Kernschicht und A und C gleich Deckschichten.

12. Verfahren zum Herstellen einer Polyesterfolie nach einem oder nach mehreren der Ansprüche 1 bis 11 nach dem Extrusionsverfahren, bei dem das vorher aufgeschmolzene Polyestermaterial durch eine Schlitzdüse extrudiert und als weitgehend amorphe Vorfolie auf einer Kühlwalze abgeschreckt wird, die amorphe Vorfolie anschließend erneut erhitzt und in Längs- und Querrichtung, bzw. in Quer- und in Längsrichtung, bzw. in Längs-, in Quer- und nochmals in Längsrichtung und/oder Querrichtung gestreckt wird, wobei die Strecktemperaturen im Bereich von $T_g$ + 10 K bis $T_g$ + 60 K eingestellt werden, mit $T_g$ = Glastemperatur des kristallisierbaren Thermoplasten, und wobei das Streckverhältnis der Längsstreckung im Bereich von 2 bis 6, insbesondere von 2,5 bis 4,5, das der Querstreckung im Bereich von 2 bis 5, insbesondere von 3 bis 4,5, und das der ggf. durchgeführten zweiten Längsstreckung von 1,1 bis 3 eingestellt werden, und bei dem anschließend die Thermofixierung der Folie bei Ofentemperaturen im Bereich von 200 bis 260 °C, insbesondere von 220 bis 250 °C, über eine Zeitdauer von 0,5 bis 10 s erfolgt.

13. Verwendung einer trüben Polyesterfolie nach einem oder nach mehreren der Ansprüche 1 bis 11 für die Fensterinnen- und -außenverglasung, für Innenraumverkleidungen, insbesondere in hellen Räumen, für den Messebau und für

Messeartikel, in Fahrzeugen und Gebäuden, im Beleuchtungssektor und im Laden- und Regalbau.

**Claims**

1. Turbid polyester film having a thickness in the range from 10 to 100 microns, which comprises as a main component a thermoplastic polyester, **characterized in that** the film comprises barium sulfate which has a mean grain size in the range from 0.1 to 0.5 microns, as the $d_{50}$ value (measured by a laser), and in addition optionally comprises a UV stabilizer as light stabilizer and it has a light transmittance, measured according to ASTM-D 1003, of greater than 56 %.

2. Polyester film according to claim 1, **characterized in that** it comprises barium sulfate in an amount ranging from 5 to 25 weight -%, based on the total weight of the film.

3. Polyester film according to claim 1 or 2, **characterized in that** it has a light transmittance, measured according to ASTM-D 1003, of greater than 56 %, preferably greater than 60 %, more preferably greater than 64 %.

4. Polyester film according to one or more of claims 1 to 3, **characterized in that** it comprises as thermoplastic polyester polyethylene terephthalate, polybutylene terephthalate or polyethylene naphthalate, preferably polyethylene terephthalate.

5. Polyester film according to one or more of claims 1 to 4, **characterized in that** it has a turbidity, measured according to ASTM-D 1003, in the range from 40 to 95 %, preferably from 45 to 90 %, more preferably from 50 to 85 %.

6. Polyester film according to one or more of claims 1 to 5, **characterized in that** it comprises barium sulfate in an amount ranging from 10.0 to 25.0 weight-%, preferably ranging from 15 to 20 weight-%, based on the total weight of the thermoplastic polyester plus pigment.

7. Polyester film according to one or more of claims 1 to 6, **characterized in that** the barium sulfate has a mean grain size in the range from 0.15 to 0.45 microns, preferably in the range from 0.20 to 0.40 microns.

8. Polyester film according to one or more of claims 1 to 7, **characterized in that** it comprises as a UV stabilizer, a quantity from 0.01 to 5.0 weight-% of 2-(4,6-diphenyl-1,3,5-triazine-2-yl)-5-(hexyl)oxy-phenol, or an amount of 0.1 to 5.0 weight-% of 2,2'-methylene-bis(6-(2H-benzotriazol-2-yl)-4-(1,1,2,2-tetramethylpropyl)-phenol, in each case based on the weight of the thermoplastic polyester.

9. Polyester film according to one or more of claims 1 to 7, **characterized In that** it comprises as a UV stabilizer, a quantity from 0.1 to 7 weight-% of 2-(2-hydroxy-4-[1-octyloxycarbonylethoxy]phenyl)-4,6-bis(4-phenylphenyl)-1,3,5-triazine, based on the weight of the thermoplastic polyester.

10. Polyester film according to one or more of claims 1 to 9, **characterized in that** it has a multilayer structure of at least one core layer and at least one covering layer.

11. Polyester film according to claim 10, **characterized in that** it has a three-layer structure A-B-A or A-B-C with B being equal to the core layer and A and C being equal to the covering layers.

12. A method for producing a polyester film according to one or more of claims 1 to 11 by extrusion, in which the previously molten polyester material is extruded through a slot die and quenched as a substantially amorphous prefilm on a chill roll, the amorphous prefilm is then reheated and stretched longitudinally and transversely, or transversely and longitudinally, or longitudinally, transversely and again longitudinally and/or transversely, wherein the stretching temperatures are being adjusted in the range from $T_g$ + 1 0K to $T_g$ + 60K, with $T_g$ = glass transition temperature of the crystallizable thermoplastic, and wherein the stretching ratio of longitudinal stretching in the range from 2 to 6, especially from 2.5 to 4.5, the transverse stretching in the range from 2 to 5, especially from 3 to 4.5, and the ratio for any second longitudinal stretching from 1.1 to 3 are being set, and in which then the heat-setting of the film at oven temperatures in the range from 200 to 260 °C, in particular from 220 to 250 °C, occurs for a period from 0.5 to 10 seconds.

13. Use of a turbid polyester film according to one or more of claims 1 to 11 for the window interior and exterior glazing,

for interior decoration, especially in bright rooms, for exhibition stands and exhibition items, vehicles and buildings, in the lighting sector and in shops and stores.

## Revendications

1. Feuille de polyester trouble ayant une épaisseur de l'ordre de 10 à 100 μm qui contient comme constituant principal un polyester thermoplastique, **caractérisée en ce que** la feuille contient du sulfate de baryum ayant une grosseur de grain de l'ordre de 0,1 à 0,5 μm, exprimée comme valeur $d_{50}$ (mesurée par laser), et en outre éventuellement un stabilisateur UV comme moyen de protection contre la lumière et **en ce qu'**elle a une translucidité, mesurée selon ASTM-D 1003, supérieure à 56 %.

2. Feuille de polyester selon la revendication 1, **caractérisée en ce qu'**elle contient du sulfate de baryum dans une quantité de l'ordre de 5 à 25 % en poids, par rapport au poids total de la feuille.

3. Feuille de polyester selon la revendication 1 ou 2, **caractérisée en ce qu'**elle a une translucidité, mesurée selon ASTM-D 1003, supérieure à 56 %, de préférence supérieure à 60 %, mieux encore supérieure à64%.

4. Feuille de polyester selon une ou plusieurs des revendications 1 à 3, **caractérisée en ce qu'**elle contient comme polyester thermoplastique du polyéthylène téréphtalate, du polybutylène téréphtalate ou du polyéthylène naphtalate, le polyéthylène téréphtalate étant préféré.

5. Feuille de polyester selon une ou plusieurs des revendications 1 à 4, **caractérisée en ce qu'**elle a une turbidité, mesurée selon ASTM-D 1003, de l'ordre de 40 à 95 %, de préférence de 45 à 90 %, mieux encore de 50 à 85 %.

6. Feuille de polyester selon une ou plusieurs des revendications 1 à 5, **caractérisée en ce qu'**elle contient du sulfate de baryum dans une quantité comprise entre 10,0 et 25,0 % en poids, de préférence comprise entre 15 et 20 % en poids, par rapport au poids total du polyester thermoplastique plus pigment.

7. Feuille de polyester selon une ou plusieurs des revendications 1 à 6, **caractérisée en ce que** le sulfate de baryum a une grosseur de grain moyenne de l'ordre de 0,15 à 0,45 μm, de préférence de l'ordre de 0,20 à 0,40 μm.

8. Feuille de polyester selon une ou plusieurs des revendications 1 à 7, **caractérisée en ce qu'**elle contient comme stabilisateur UV une quantité de 0,01 à 5,0 % en poids de 2-(4,6-diphényl-1,3,5-triazin-2-yl)-5-(hexyl)oxy-phénol ou une quantité de 0,1 à 5,0 % en poids de 2,2'-méthylèn-bis-(6-(2H-benzotriazol-2-yl)-4-(1,1,2,2-tétraméthylpropyl)-phénol, chaque fois par rapport au poids du polyester thermoplastique.

9. Feuille de polyester selon une ou plusieurs des revendications 1 à 7, **caractérisée en ce qu'**elle contient comme stabilisateur UV une quantité de 0,1 à 7% en poids de 2-(2-hydroxy-4-[1-octyloxycarbonyléthoxy]phényl)-4,6-bis(4-phénylphényl)-1,3,5-triazine, par rapport au poids du polyester thermoplastique.

10. Feuille de polyester selon une ou plusieurs des revendications 1 à 9, **caractérisée en ce qu'**elle a une structure multicouche composée d'au moins une couche centrale et d'au moins une couche de couverture.

11. Feuille de polyester selon la revendication 10, **caractérisée en ce qu'**elle a une structure tricouche du type A-B-A ou A-B-C, B étant égale à la couche centrale et A et C étant égales aux couches de couverture.

12. Procédé de production d'une feuille de polyester selon une ou plusieurs des revendications 1 à 11 selon le procédé d'extrusion dans lequel le matériau polyester préalablement fondu est extrudé par une filière à fente et est refroidie brusquement sur un cylindre de refroidissement comme préfeuille largement amorphe, la préfeuille amorphe est ensuite de nouveau chauffée et est étirée dans le sens longitudinal et le sens transversal ou dans le sens transversal et dans le sens longitudinal ou dans le sens longitudinal, dans le sens transversal et de nouveau dans le sens longitudinal et/ou dans le sens transversal, les températures d'étirage étant réglées dans la plage de $T_g$ + 10 K à $T_g$ + 60 K, $T_g$ étant = à la température de transition vitreuse de la matière thermoplastique cristallisable, et le rapport de l'étirage longitudinal est réglé dans la plage de 2 à 6, en particulier de 2,5 à 4,5, celui de l'étirage transversal dans la plage de 2 à 5, en particulier de 3 à 4,5 et celui du deuxième étirage longitudinal éventuellement effectué de 1,1 à 3, et dans lequel la thermofixation de la feuille a ensuite lieu à des températures de four de l'ordre de 200 à 260 °C, en particulier de 220 à 250 °C, pendant une durée de temps de 0,5 à 10 s.

**13.** Utilisation d'une feuille de polyester trouble selon une ou plusieurs des revendications 1 à 11 pour le vitrage intérieur et extérieur de fenêtres, pour des habillages de locaux intérieurs, en particulier dans des locaux clairs, pour l'aménagement de foire et des articles de foire, dans des véhicules et des bâtiments, dans le secteur de l'éclairage et dans l'aménagement de magasins et de rayonnages.

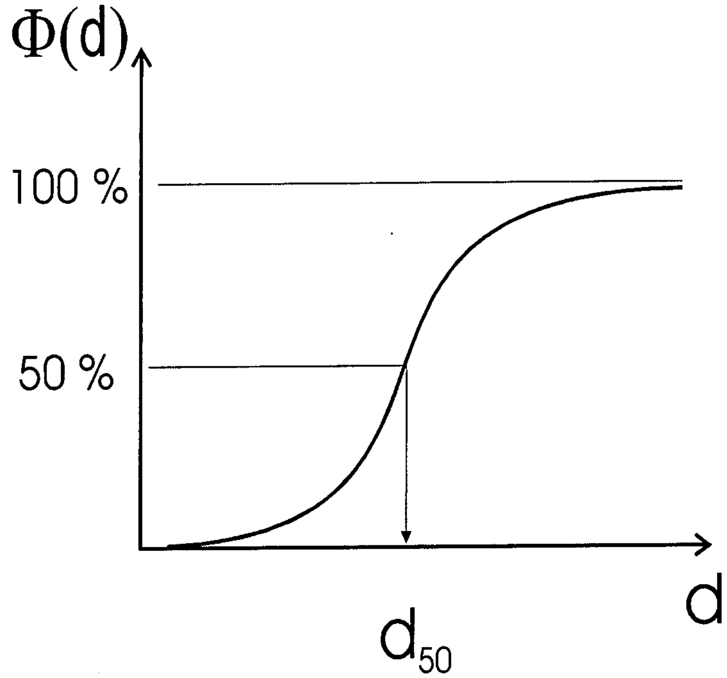


Figur 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US PS4780402 A
- EP 1125967 A
- EP 1125966 A
- EP 1842663 A


### In der Beschreibung aufgeführte Nicht-Patentliteratur


- *Kunststoff-Journal,* 1974, vol. 8 (10), 30-36
- *KUNSTSTOFF-JOURNAL,* 1974, vol. 11, 36-31